# EUROPÄISCHE PATENTSCHRIFT

(11) **EP 0 750 141 B1**
(45) Veröffentlichungstag und Bekanntmachung des Hinweises auf die Patenterteilung: **26.01.2000**
(21) Anmeldenummer: 95114528.3
(22) Anmeldetag: 15.09.1995
(51) Int. Cl.: F16J 15/00, F16J 15/22

(54) **Stopfbuchspackung mit trapezoidem Grundquerschnitt**
Packing of a stuffing box with trapezoidal cross-section
Bourrage d'étanchéité pour arbre tournant ayant une section trapézoidale

(30) Priorität: 19.09.1994 DE 4433318
(43) Veröffentlichungstag der Anmeldung: 27.12.1996
(73) Patentinhaber: Starnberger Werk für Beschichtungen und Dichtungen GmbH, 82319 Starnberg (DE)
(72) Erfinder: Ekman, Hans, D-82319 Starnberg (DE)

(56) Entgegenhaltungen:
- EP-A- 0 339 232
- WO-A-94/11555
- GB-A- 826 214
- US-A- 4 802 398

## Beschreibung

Eine Stopfbuchspackung trapezoiden Grundquerschnitts gemäß dem Oberbegriff des Patentanspruchs 1 wird vorgeschlagen. Das breite Ende des trapezoiden Grundquerschnitts der Packung liegt an der radial äußeren Stopfbuchswand an, das schmale Ende liegt an der radial inneren Welle an.

### Stand der Technik

Bekanntlich ist die Übertragung des axialen Drucks bei geflochtenen Packungen ein ungelöstes technisches Problem. Da der von der Stopfbuchsbrille übertragene axiale Druck über die Länge der Buchse stark abnimmt, wird der unterste Packungsring oft - technisch bedingt - nicht ausreichend angezogen, um die Dichtfunktion voll anzunehmen. Eine mangelhafte mediumseitige Abdichtung erlaubt das Eindringen des häufig abrasiven Mediums in die Stopfbuchse und verursacht erhöhten Verschleiß und führt öfters zu einem frühzeitigen Dichtungsausfall.

Bei Stopfbuchspackungen mit trapezoidem Querschnitt (vergl. Patentschriften US-PS 4.550.639, US-PS 4.672.879, US-PS 4.729.277) wird der axiale Brillendruck ungleichmäßig von einem Packungsring auf den nächsten übertragen. Beim Anziehen der Stopfbuchsbrille gestaltet sich wegen der Reibung an der Stopfbuchswand und an der Welle die axiale Druckverteilung bei diesen herkömmlichen Packungen mit trapezoidem Querschnitt im eingebauten Zustand konvex. Diese Konvexität der Druckverteilung verhindert eine effektive axiale Druckübertragung längs der Stopfbuchse. Es werden lediglich die unteren geflochtenen Packungsringe zwecks axialer Druckübertragung verformt. Hierbei wird ein Großteil des axialen Drucks in radialen Druck auf Welle und Stopfbuchswand umgesetzt und nicht auf den Stopfbuchsgrund vermittelt.

Bei einer Stopfbuchspackung rechteckigen Querschnitts (vergl. US-PS 2.113.098) mit über die gesamte Flankenbreite konvexer Seitenfläche aus Gummi ist in eingebautem Zustand trotz des aufgebrachten axialen Drucks ein Spalt zwischen den benachbarten Dichtungringen sowohl an Wandung der Stopfbuchse als auch an der Welle vorhanden.

Bei trapezoid geformten Packungen gemäß der PCT-Druckschrift WO 94/11555 wird der Druck an der Stopfbuchswand konzentriert, um das Mitlaufen der Packung mit der sich drehenden Welle zu verhindern. Bei dieser Konstruktion wird der axiale Druck in eingebautem Zustand vorwiegend über eine Brücke an der Außenkante der Packung übertragen. Da das zumeist weiche und elastische Flechtmaterial nicht gut den auf die äußere Kante der Packung konzentrierten Druck übertragen vermag, trägt dieses Konzept auch nicht zur Lösung der mit der axialen Druckverteilung verbundenen Problematik bei.

### Aufgabe und Lösung

Die Aufgabe der vorgeschlagenen Stopfbuchspackung ist es, bei einer Packung mit trapezoidem Grundquerschnitt in eingebautem Zustand die Druckübertragung des Brillendrucks als axiale und radiale Druckübertragung über die Länge der Stopfbuchse zu verbessern, um sich wegen des auf die Wellenlauffläche gerichteten radialen Drucks im Bereich aller einzelnen Packungsringe wellenschonend zu verhalten. Gelöst wird die Aufgabe durch eine Stopfbuchspackung mit den Merkmalen nach Patentanspruch 1. Die Unteransprüche 2 und 3 stellen sinnvolle Ausgestaltungen des Gegenstands dar.

Bei einer Stopfbuchspackung trapezoiden Grundquerschnitts, dessen breites Ende an der radial äußeren Stopfbuchswand und dessen schmales Ende an der radial inneren Welle anliegen, werden durch die Verwendung von Kernfäden und/oder von inneren Einlauffäden an bzw. unterhalb der horizontalen Mittellinie der Packung zur Welle hin an den Flanken des trapezoiden Grundquerschnitts konvexe Seitenflächen erzeugt, die sich nicht über die gesamte Flankenbreite erstrecken. Der Mittelpunkt der konvexen Fläche befindet sich unterhalb der horizontalen Mittellinie der Packung. Konstruktionsmerkmale dieser verbesserten Packung sind folgende:
1. Die Anzahl der Einlauf fäden verkleinert sich stets schichtweise von der breiteren Seite zur schmaleren Seite der trapezoiden Packung.
2. Alle inneren Einlauffäden haben die gleiche ggf. erhöhte Anzahl, und/oder es werden zusätzliche Kernfäden verwendet, um die konvexe Seitenfläche der Packung zu erzielen.
3. Für die zusätzlichen Einlauffäden und/oder Kernfäden können Fäden aus einem steiferen rigideren Material verwendet werden, um die Formstabilität der Konstruktion bzw. die Druckübertragung weiter zu verbessern.
4. Diese Fäden können außerdem vor dem Flechten vorimprägniert werden, um die Querschnittsdichte und die Gasdichtheit zu erhöhen und um den Faserverbund zu stärken.

Mit den konvexen Seitenflächen eines Packungsrings der Packung wird die konvexe axiale Druckverteilung besser aufgefangen und an den nächsten Packungsring übertragen. Diese Übertragung wird durch die Verwendung von steiferen Einlauf- bzw. Kernfäden und/oder einen engeren Faserverbund im Zentrum der Packung verbessert. Es ist ein Resultat, daß ein größerer Anteil des Anzugdrucks, des axialen Brillendrucks auf den untersten, den dem Stopfbuchsgrund am nächsten gelegenen Packungsring übertragen wird. Der höhere axiale Druck am untersten Packungsring verbessert die Dichtwirkung des Rings und verhindert das Eindringen des Mediums in die Buchse. Das Eindringen von mehr Medium, als für die Aufrechterhaltung eines Schmierfilms notwendig ist, ist nachteilig für die Funktion der Stopfbuchse. Die Vorimprägnierung der Einlauffäden und der Kernfäden erhöht zusätzlich die Querschnittsdichtheit der Packung.

Bei Packungen, welche mit einer stärkeren reibfesteren Kantenverstärkung versehen sind und deren Flechtfäden an den Laufflächen aus einem weicheren bzw. besser schmierenden Material bestehen, wird durch obige Konstruktion die Lauffläche stärker als die Kantenfäden an die Welle gepreßt. Folglich wird der durch das festere Material der Kanten verursachte Verschleiß reduziert, da die bessere Gleiteigenschaften besitzende Lauffläche die Hauptlast des radialen Drucks überträgt. Die Verwendung von Kantenverstärkungen ist insbesondere üblich bei Plungerpumpen. Bei Kreiselpumpen wird mit der obigen Konstruktion die schädliche Rillenbildung an der Welle an den Stellen der Kantenverstärkung vermindert.

Figur 1 bis Figur 3 der Zeichnung zeigen Stopfbuchspackungen nach dem Stand der Technik.

Figur 1 zeigt eine Wellenpackung mit trapezoidem Querschnitt nach dem Stand der Technik in eingebautem Zustand, bevor die Stopfbuchsbrille angezogen worden ist.

Figur 2 zeigt die gleiche Wellenpackung nach dem Anziehen der Stopfbuchsbrille.

Figur 3 zeigt auch eine trapezoid geformte Packung nach dem Stand der Technik. Der axiale Druck wird hier vorwiegend über eine Brücke an der Außenkante der Packung übertragen.

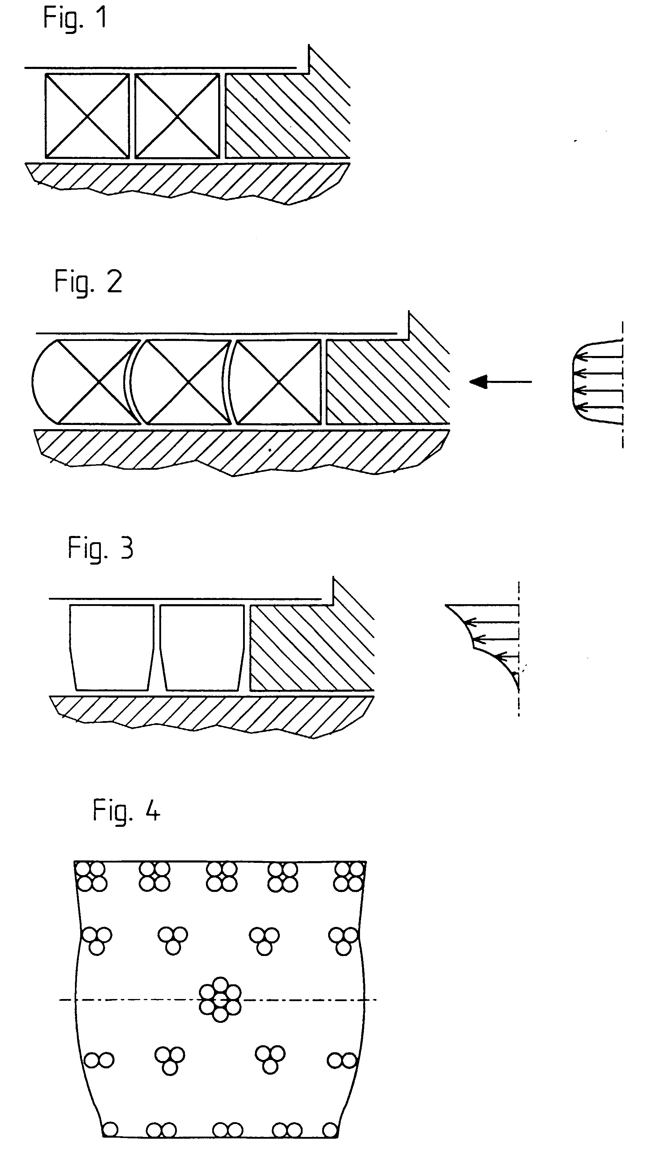

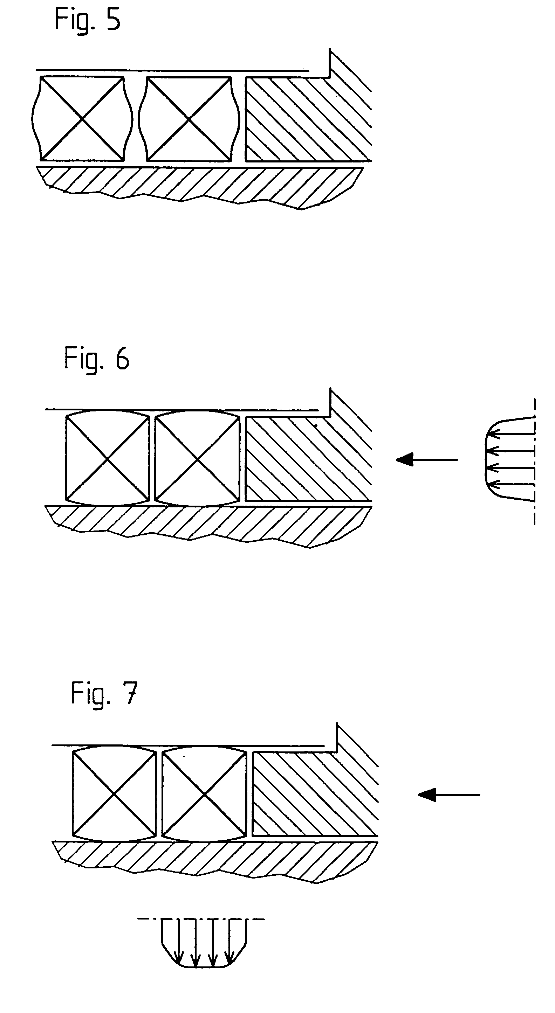

Ein Ausführungsbeispiel der Erfindung ist in Figur 4 bis Figur 7 der Zeichnung dargestellt.

Die erfindungsgemäße Stopfbuchsenpackung mit trapezoidem Grundquerschnitt zeigt Figur 4.

Die Figuren 5 bis 7 zeigen die erfindungsgemäße Packung in eingebautem Zustand. Figur 6 zeigt zusätzlich den Druckverlauf des axialen Drucks in radialer Richtung der Stopfbuchspackung. Figur 7 zeigt den Druckverlauf des radialen Drucks auf die Welle in axialer Richtung des Packungsrings. Bei den Beispielen nach den Figuren 6 und 7 ist die Stopfbuchsbrille angezogen.

## Patentansprüche

1. Stopfbuchspackung trapezoiden Grundquerschnitts, dessen breites Ende an der radial äußeren Stopfbuchswand und dessen schmales Ende an der radial inneren Welle anliegen, dadurch gekennzeichnet,
daß durch Verwendung von Kernfäden und/oder von inneren Einlauffäden an bzw. unterhalb der horizontalen Mittellinie der Packung zur Welle hin an den Flanken des trapezoiden, Grundquerschnitts konvexe Seitenflächen erzeugt werden, die sich nicht über die gesamte Flankenbreite erstrecken.

2. Packung nach Anspruch 1, dadurch gekennzeichnet,
daß die Kern- und/oder Einlauffäden mit einem den Faserverbund schließenden Imprägniermittel vor der Verflechtung imprägniert werden.

3. Packung nach Anspruch 1 oder Anspruch 2, dadurch gekennzeichnet,
daß die als Kern- und/oder Einlauffäden verwendeten Fäden aus einem rigideren oder festeren Material als die übrigen Flechtfäden der Packung bestehen.

## Claims

1. A gland packing with trapezoidal cross section with the broader side of the packing against the radially outer wall of the stuffing box, and the narrower side against the radially inner side against the shaft, characterized by,
that by using core twins and/or inner run-in twins on or below the horizontal centerline of the packing towards the shaft on the flanks of the trapezoidal base cross section producing convex side surfaces, which do not reach over the total flank width.

2. Packing acc. to claim 1, characterized by,
that the core and/or run-in twins are impregnated before the braiding with an impregnation matter which improves the fiber compound.

3. Packing acc. to claim 1 or claim 2, characterized by,
that the core and/or run-in twins are of a more rigid or stiff material than the braiding twins in the packing.

## Revendications

1. Garniture de presse-étoupe de section trapézoïdale dont l'extrémité large est située sur la partie radiale de la paroi extérieur du presse-étoupe et dont l'extrémité étroite est située sur la partie radiale de l'axe, se caractérisant comme suit:
Par l'utilisation de fils de chaîne et / ou de fils porteur intérieurs se trouvant directement au niveau ou en-dessous de la ligne médiane horizontale de la garniture de presse-étoupe en direction de l'axe, on obtient des surfaces latérales convexes au niveau des flancs de la section trapézoïdale qui ne s'étendent pas sur toute la largeur du flanc.

2. Garniture selon la revendication 1, se caractérisant comme suit:
Les fils de chaîne et/ou les fils porteur sont à imprégner avant le tressage avec un produit d'imprégnation afin d'imperméabiliser la structure des fibres.

3. La garniture selon la revendication 1 ou revendication 2, se caractérisant comme suit:
Les fils utilisés en tant que fils de chaîne et/ou les fils porteur sont composés d'une matière plus rigide ou plus solide que les autres fils de tressage de la garniture.
